# EUROPÄISCHE PATENTSCHRIFT

(11) **EP 1 150 096 B1**
(45) Veröffentlichungstag und Bekanntmachung des Hinweises auf die Patenterteilung: **13.09.2006**
(21) Anmeldenummer: 01109718.5
(22) Anmeldetag: 20.04.2001
(51) Int. Cl.: G01C 1/04

(54) **Fernrohr für geodätische Geräte, insbesondere für Videotachymeter**
Telescope for surveying instruments, specifically for video tachymeter
Télescope pour instruments géodésiques, en particulier pour tachéomètre vidéo

(30) Priorität: 28.04.2000 DE 10020986
(43) Veröffentlichungstag der Anmeldung: 31.10.2001
(73) Patentinhaber: Trimble Jena GmbH, 07745 Jena (DE)
(72) Erfinder: Donath, Bernd, 07747 Jena (DE); Monz, Ludwin-Heinz, 89081 Ulm (DE)
(74) Vertreter: Geyer, Fehners & Partner

(56) Entgegenhaltungen:
- H. KAHMEN, M. ROIC: "A New Generation of Measurement Robots for Object Reconstruction without Targeting" OPTICAL 3-D MEASUREMENT TECHNIQUES III, 2. - 4. Oktober 1995, Seiten 251-262, XP008025622 Wien

## Beschreibung

Die Erfindung bezieht sich auf ein Fernrohr für geodätische Geräte, insbesondere für Videotachymeter oder Videotheodolite, mit unterschiedlichen Zwecken dienenden Strahlengängen.

Herkömmliche Fernrohre geodätischer Geräte umfassen meist ein Objektiv, eine Fokussierlinse, welche in der Regel so ausgebildet ist, daß eine kurze Baulänge des Fernrohres erreicht wird. Ferner umfassen diese Fernrohre eine Strichkreuzplatte und ein Okular zur visuellen Beobachtung des Objektes. In der Regel besitzen diese Fernrohre eine feste Brennweite und Vergrößerung, die entsprechend den Anforderungen des Gerätes ausgelegt sind.

Moderne elektrooptische Tachymeter besitzen zusätzlich für die Streckenmessung und für sogenannte Zielsuchfunktionen jeweils gesonderte Strahlengänge, die aus dem visuellen Fernrohrstrahlengang ausgekoppelt bzw. beim Sender eingekoppelt werden. Hinsichtlich der Feinzielsuche erfolgt in der Regel eine Abbildung auf die CCD-Matrix oder auf den CCD-Chip einer CCD-Kamera oder auf eine Quadrantendiode, mit denen dann eine entsprechende Bild- und/oder Signalauswertung vorgenommen wird.

So ist in dem DE-GM 90 07 731 beschrieben, daß, um unterschiedliche Bildfelder realisieren zu können, eine Weitwinkel- und eine Telekamera auf ein Tachymeterfernrohr aufgesetzt sind, um das Tachymeter mittels eines Joysticks von einem Bediengerät aus fernbedienen zu können.

Bei einer Anordnung nach dem EP 0 281 518 erfolgt die Abbildung einer Referenzmarke in Form einer Blende außerhalb des visuellen Sehfeldes auf die Kamera zur Sicherstellung der Zuordnung der Zielachsen. Dabei ist die Kamera auf dem Fernrohr angeordnet, wobei das Bild durch ein Prisma und eine Zusatzoptik in die Kamera eingespiegelt wird.

Eine Weiterentwicklung dieser Anordnung ist von Gruhn und Kahmen in einer Veröffentlichung der Konferenz über "Optische 3-D-Meßtechniken III, Wien 2. Bis 4. Oktober 1995, Seite 256, beschrieben. Hierbei hat die auf dem Fernrohr angeordnete CCD-Kamera einen zweiten Strahlengang mit einer zusätzlichen Weitwinkeloptik, die jedoch von der eigentlichen Fernrohroptik getrennt ist.

Will man nun das visuelle Bild des Geländes mit einer CCD-Kamera aufnehmen und es auf einem Bildschirm darstellen, ohne für die Anziel- und Meßfunktion ein Okular zu verwenden, so treten folgende nachteilige Probleme auf:

Das Fernrohr des Gerätes hat aufgrund seiner notwendigen großen Brennweite ein begrenztes und enges Fernrohrsehfeld, welches für eine Ortung eines Zieles im Gelände ungeeignet ist bzw. diese erheblich erschwert.
Eine Registrierung eines größeren Bildausschnitts vom Gelände ist in diesem Falle nur mittels einer Aneinanderreihung von mehreren Einzelbildern mit einem entsprechenden Zeitaufwand möglich.
Auch eine elektronische Zoomfunktion der CCD-Kamera würde hier keine wesentliche Verbesserung bringen.

So ist es die Aufgabe der Erfindung, ein Fernrohr für ein geodätisches Gerät zu schaffen, das diese Nachteile beseitigt.

Die Aufgabe der Erfindung wird mit den im ersten Patentanspruch dargelegten Mittel gelöst. In den abhängigen Ansprüchen sind Ausgestaltungen und Einzelheiten der Erfindung beschrieben.

Erfindungsgemäß ist im Fernrohr ein mit dem Objektiv zusammenwirkendes Zusatzobjektiv zur Erzeugung eines Weitwinkelstrahlenganges vorgesehen und in unmittelbarer Nähe hinter dem Objektiv angeordnet. Weiterhin ist ein optisches Mittel zur Abbildung des Weitwinkelstrahlenganges und des Strahlenganges für die Zielsuche in einer gemeinsamen Bildebene vorhanden. Zur wechselseitigen Abblendung des Weitwinkelstrahlenganges und des Strahlenganges für die Zielsuche ist eine schaltbare Blende dieser gemeinsamen Bildebene vorgeordnet, und zur Erzeugung des Strahlenganges für die Zielsuche zwischen dem Objektiv und der zweiten Bildebene des Objektivs ist ein Selektivspiegel angeordnet.

Dabei kann als Zusatzobjektiv eine geeignete einzelne Linse mit dem Objektiv verbunden sein.

Es ist vorteilhaft, wenn Mittel zur Abbildung des Weitwinkelstrahlenganges und des Strahlenganges für die Zielsuche in einer gemeinsamen Bildebene vorgesehen sind. In dieser gemeinsamen Bildebene befinden sich eine CCD-Matrix einer CCD-Kamera und/oder eine fotoelektrische Empfängeranordnung.

Die schaltbare Blende bewirkt durch Verschieben in einer zur gemeinsamen Bildebene parallelen Ebene ein wechselseitiges Abblenden dieser Strahlengänge.

Der Selektivspiegel reflektiert einen Teil des das Objektiv passierenden Lichtes.

Eine einfache Ausführung ergibt sich, wenn ein den Weitwinkelstrahlengang und, nach Reflexion am Selektivspiegel, den Strahlengang für die Zielsuche zur ersten Bildebene umlenkendes Element zwischen dem Objektiv und dem Selektivspiegel angeordnet ist.

Weiterhin ist es vorteilhaft, wenn zwecks Durchführung der Fokussierung die CCD-Matrix und/oder die Empfängeranordnung in Richtung der optischen Achse des Weitwinkelstrahlenganges bzw. des Strahlenganges für die Zielsuche einstellbar angeordnet sind.

Die Erfindung soll nachstehend an einem Ausführungsbeispiel näher erläutert werden. In der Zeichnung zeigen:
Fig. 1 den optischen Aufbau des Fernrohres,
Fig. 2 eine Draufsicht auf die CCD-Matrix der CCD-Kamera und
Fig. 3 eine Draufsicht auf die in der zweiten Bildebene angeordnete Streckenmeßeinrichtung.

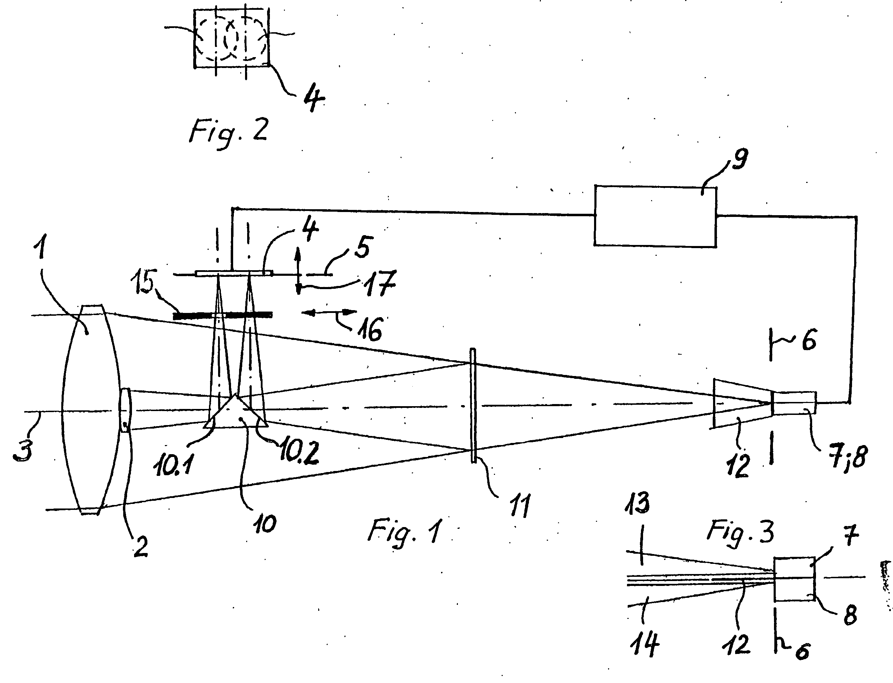

Das in Fig.1 in seinem optischen Aufbau dargestellte Fernrohr für geodätische Geräte umfaßt ein Objektiv 1 und ein mit diesem zusammenwirkendes Zusatzobjektiv 2, welches vorteilhaft in unmittelbarer Nähe hinter dem Objektiv 1 angeordnet oder mit diesem, wie in Fig. 1 veranschaulicht, verbunden ist. Dieses Zusatzobjektiv 2 kann in einfacher Weise auf dem Objektiv 1 aufgekittet werden. Objektiv 1 und Zusatzobjektiv 2 stellen in der Verbindung ihrer optischen Wirkung ein Weitwinkelobjektiv dar. Mit dem Bezugszeichen 3 ist die optische Achse des Objektivs 1 bezeichnet. Dieses Fernrohr umfaßt ferner Mittel zur Erzeugung gesonderter Strahlengänge für die Streckenmessung und für die Zielsuche, wobei im Strahlengang für die Zielsuche eine CCD-Matrix 4 einer CCD-Kamera oder eine positionsabhängige, fotoelektrische Empfängeranordnung (Quadrantenfotoempfänger) in einer ersten Bildebene 5 des Objektivs 1 vorgesehen sind.

In einer zweiten Bildebene 6 des Objektivs 1 sind vorteilhaft ein Strahler 7 als Lichtquelle und ein Empfänger 8 einer Streckenmeßeinrichtung vorgesehen. Um eine gegenseitige Beeinflussung des von der Lichtquelle 7 ausgesandten Lichtstrahlung und der auf dem Empfänger 8 auftreffenden Empfängerstrahlung weitestgehend auszuschließen, ist ein Sheet 12 gegen ein Übersprechen der Strahlungen vorgesehen. Diese Streckenmeßeinrichtung und die CCD-Matrix 4 der CCD-Kamera oder die Empfängeranordnung in der ersten Bildebene 5 sind mit einer Auswerteeinheit 9 verbunden, welche die Signal- und/oder Bildauswertung vornimmt.

Zur Erzeugung eines Weitwinkelstrahlenganges, mit dem ein größerer Bildausschnitt des Geländes erzielt wird, um eine bessere Ortung eines zu vermessenden Gelände- oder Zielpunktes zu erreichen, und um zu realisieren, daß der Strahlengang für die Zielsuche und der Weitwinkelstrahlengang in der ersten Bildebene 5, also auf der CCD-Matrix fokussiert sind, sind zwischen dem Objektiv 1 und der zweiten Bildebene 6 in der Reihenfolge ein optisches Mittel 10, beispielsweise in Form eines Licht aus zwei entgegengesetzten Richtungen umlenkenden Umlenkelementes, und ein weiteres optischen Element 11, z. B. ein Selektivspiegel, längs der optischen Achse angeordnet. In der Fig. 1 ist das Mittel 10 als ein rechtwinkliges Prisma dargestellt, dessen Kathetenflächen 10. 1 und 10.2 die strahlenumlenkenden Flächen sind.

Mit dieser Anordnung der optischen Bauelemente sind in diesem Fernrohr drei, unterschiedlichen Zwecken dienenden Strahlengänge realisiert. Es sind dieses der Strahlengang für die Zielsuche oder Bilderfassung, der Strahlengang für Streckenmessung und der Weitwinkelstrahlengang.

Der Strahlengang für die Zielsuche oder Bilderfassung wird wie folgt realisiert: Das über das Objektiv 1 einfallende Licht wird am optischen Element 11 (Selektivspiegel) reflektiert, an der strahlenumlenkenden Fläche 10.2 des optischen Elementes 10 umgelenkt und auf der CCD-Matrix 4 der CCD-Kamera abgebildet.

Bei dem Strahlengang für die Streckenmessung wird der von der Lichtquelle 7 in einem Sendestrahlengang 13 ausgesendete Strahl in Form einer Halbpupille durch das optische Element 11 und das Objektiv 1 hindurch zum zu vermessenden Zielpunkt (nicht dargestellt), welcher auch ein Tripelprisma sein kann, gesendet. Der dort reflektierte Strahl wird im Empfängerstrahlengang 14 über das Objektiv 1 und das optische Element 1 auf den Empfänger 8 geleitet. Dabei werden Empfängerstrahlengang 14 und Sendestrahlengang 13 durch den Sheet 12 gegen ein Übersprechen der Strahlung getrennt. Aus den von dem Empfänger 8 gelieferten Signalen werden in der Auswerteeinheit 9 zu Streckenmeßwerten weiterverarbeitet.

Der dritte Strahlengang, der Weitwinkelstrahlengang ist wie folgt realisiert: In diesem Strahlengang kann ein größerer Gebiet um den Zielpunkt herum ausgenommen werden und somit u. a. ein Auffinden eines zu vermessenden Zielpunktes wesentlich erleichtert werden. Mit diesem Strahlengang wird das Zielgebiet durch das Objektiv 1, das Zusatzobjektiv 2 und über die strahlenumlenkende Fläche 10.1 des als rechtwinkliges Prisma ausgebildeten optischen Mittels 10 auf die in der ersten Bildebene 5 angeordnete CCD-Matrix 4 abgebildet.

Um in der Bildebene 5 eine Umschaltung zwischen dem Weitwinkelstrahlengang und dem Strahlengang für die Zielsuche vornehmen zu können, ist dieser Bildebene 5 eine verschiebbare Blende 1 5 vorgeordnet. Durch den Pfeil 1 6 ist die Verschieberichtung angezeigt.

Pfeil 17 kennzeichnet die Verschiebung der CCD-Matrix 4 zwecks Durchführung der Fokussierung.

Es hat sich als vorteilhaft erwiesen, wenn ein Verhältnis der Brennweiten des Weitwinkelstrahlenganges und der Brennweite des Strahlenganges für die Zielsuche von 1 : 3 vorgesehen wird. Es ist auch ein anderes Verhältnis möglich. Bei dem obigen Verhältnis von 1 : 3 ist das Sehfeld des Weitwinkelstrahlenganges ungefähr dreimal so groß wie das Sehfeld des Strahlenganges für die Zielsuche.

In Fig. 2 ist die CCD-Matrix 4 in Draufsicht dargestellt, wobei die Felder durch die abgebnildeten Strahlengänge überdeckt sind.

Fig. 3 zeigt die Draufsicht auf Lichtquelle 7 und Empfänger 8 und Sende- und Empfangsstrahlengang 13; 14, zwischen denen der Sheet 12 zur Trennung angeordnet ist.

## Patentansprüche

1. Fernrohr für geodätische Geräte, umfassend
- ein Objektiv (1),
- Mittel zur Erzeugung gesonderter Strahlengänge für die Zielsuche oder Bilderfassung und für die Streckenmessung,
wobei im Strahlengang für die Zielsuche eine CCD-Kamera mit CCD-Matrix oder eine positionsabhängige, fotoelektrische Empfängeranordnung (Quadrantenfotoempfänger) in einer ersten Bildebene (5) des Objektivs und in einer zweiten Bildebene (6) des Objektivs ein Empfänger für die Streckenmessung angeordnet sind,
- und eine Auswerteeinrichtung (9), welche mit der CCD-Kamera oder Empfängeranordnung zur Signal- und/oder Bildauswertung verbunden ist, ***dadurch gekennzeichnet,***
- **daß** im Fernrohr ein mit dem Objektiv (1) zusammenwirkendes Zusatzobjektiv (2) zur Erzeugung eines Weitwinkelstrahlenganges vorgesehen und in unmittelbarer Nähe hinter dem Objektiv (1) angeordnet ist,
- zwischen dem Objektiv (1) und der zweiten Bildebene (6) des Objektivs (1) ein als Selektivspiegel wirkendes optisches Element (11) zur Erzeugung des Strahlenganges für die Zielsuche angeordnet ist,
- ein optisches Mittel (10) zur Abbildung des Weitwinkelstrahlenganges und des Strahlenganges für die Zielsuche in einer gemeinsamen Bildebene (5) vorhanden ist, und
- dieser gemeinsamen Bildebene (5) eine schaltbare Blende (15) vorgeordnet ist, zur wechselseitigen Abblendung des Weitwinkelstrahlenganges und des Strahlenganges für die Zielsuche.

2. Fernrohr nach Anspruch 1, **dadurch gekennzeichnet, daß** in der gemeinsamen Bildebene (5) die CCD-Matrix (4) der CCD-Kamera oder die fotoelektrische Empfängeranordnung vorgesehen sind.

3. Fernrohr nach einem der vorgehenden Ansprüche, ***dadurch gekennzeichnet,* daß** ein den Weitwinkelstrahlengang und den Strahlengang für die Zielsuche zur ersten Bildebene umlenkendes Element zwischen dem Objektiv und dem Selektivspiegel angeordnet ist.

4. Fernrohr nach einem der vorgehenden Ansprüche, ***dadurch gekennzeichnet,* daß** zur Fokussierung die CCD-Matrix oder die Empfängeranordnung in Richtung der optischen Achse des Weitwinkelstrahlenganges bzw. des Strahlenganges für die Zielsuche einstellbar angeordnet sind.

## Claims

1. Telescope for geodetic instruments, comprising
- an objective (1),
- means for generating separate beam paths for target seeking or image detection and for distance measurement, wherein in the beam path for the target seeking a CCD camera with CCD matrix or a position-dependent photoelectric receiver arrangement (quadrant photoreceiver) is disposed in a first image plane (5) of the objective and a receiver for the distance measurement is disposed in a second image plane (6) of the objective,
- and an evaluation device (9) which is connected to the CCD camera or receiver arrangement for signal and/or image evaluation,
**characterised in that**
- an additional objective (2) which co-operates with the objective (1) for generation of a wide-angle beam path is provided in the telescope and is disposed in the immediate vicinity behind the objective (1),
- an optical element (11) acting as a selective mirror for generation of the beam path for the target seeking is disposed between the objective (1) and the second image plane (6) of the objective (1),
- an optical means (10) for imaging of the wide-angle beam path and of the beam path for the target seeking is provided in a common image plane (5), and
- a switchable diaphragm (15) is disposed in front of this common image plane (5) for alternately stopping down of the wide-angle beam path and of the beam path for the target seeking.

2. Telescope as claimed in Claim 1, **characterised in that** the CCD matrix (4) of the CCD camera or the photoelectric receiver arrangement is provided in the common image plane (5).

3. Telescope as claimed in any one of the preceding claims, **characterised in that** an element which deflects the wide-angle beam path and the beam path for the target seeking relative to the first image plane is disposed between the objective and the selective mirror.

4. Telescope as claimed in any one of the preceding claims, **characterised in that** for focusing the CCD matrix or the receiver arrangement is disposed so as to be adjustable in the direction of the optical axis of the wide-angle beam path or of the beam path for the target seeking.

## Revendications

1. Télescope pour appareils géodésiques, comprenant
- un objectif (1),
- des moyens pour produire des parcours de rayons particuliers pour la recherche de cible ou l'acquisition d'images et la mesure de distance, dans le parcours de rayons pour la recherche de cible étant disposée une caméra CCD avec matrice CCD ou un dispositif de réception photo-électrique, dépendant de la position (photorécepteur à cadran) dans un premier plan d'image (5) de l'objectif, et dans un deuxième plan d'image (6) de l'objectif, un récepteur pour la mesure de distance,
- et un dispositif d'exploitation (9) qui est relié à la caméra CCD ou à le dispositif de réception pour l'exploitation des signaux et/ou des images,
**caractérisé**
- **en ce que** dans le télescope est prévu un objectif supplémentaire (2), coopérant avec l'objectif (1), pour produire un parcours de rayons grand angle, et disposé à proximité immédiate derrière l'objectif (1),
- entre l'objectif (1) et le second plan d'image (6) de l'objectif (1) est disposé un élément optique (11), servant de miroir sélectif, pour produire le parcours de rayons pour la recherche de cible,
- un moyen optique (10) pour reproduire le parcours de rayons grand angle et le parcours de rayons pour la recherche de cible dans un plan d'images (5) commun, et
- devant ce plan d'images (5) commun est placé un diaphragme (15) commutable pour exclure alternativement le parcours de rayons grand angle et le parcours de rayons pour la recherche de cible.

2. Télescope selon la revendication 1, **caractérisé en ce que** dans le plan d'image (5) commun est prévue la matrice CCD (4) de la caméra CCD ou le dispositif de réception photo-électrique.

3. Télescope selon l'une des revendications précédentes, **caractérisé en ce qu'**un élément déviant le parcours de rayons grand angle et le parcours de rayons pour la recherche de cible, par rapport au premier plan d'image, est disposé entre l'objectif et le miroir sélectif.

4. Télescope selon l'une des revendications précédentes, **caractérisé en ce que** pour la focalisation la matrice CCD ou le dispositif de réception est monté réglable dans la direction de l'axe optique du parcours de rayons grand angle ou du parcours de rayons pour la recherche de cible.
